# FASCICULE DE BREVET EUROPEEN

(11) **EP 0 486 349 B1**
(45) Date de publication et mention de la délivrance du brevet: **08.09.1993**
(21) Numéro de dépôt: 91402867.5
(22) Date de dépôt: 25.10.1991
(51) Int. Cl.: F16H 61/16, F16H 63/30

(54) **Dispositif de commande d'une boîte de vitesses de véhicule automobile**
Betätigungseinrichtung eines Kraftfahrzeuggetriebes
Motorvehicle gearbox control device

(30) Priorité: 16.11.1990 FR 9014318
(43) Date de publication de la demande: 20.05.1992
(73) Titulaire: AUTOMOBILES PEUGEOT, 75116 Paris (FR); AUTOMOBILES CITROEN, 92200 Neuilly-sur-Seine (FR)
(72) Inventeur: Chretien, Philippe, F-78430 Louveciennes (FR)
(74) Mandataire: Polus, Camille

(56) Documents cités:
- EP-A- 0 219 957
- DE-A- 2 949 354
- FR-A- 2 299 562
- FR-A- 2 643 124
- GB-A- 2 041 119
- US-A- 3 367 205
- US-A- 4 633 728

## Description

La présente invention a pour objet un dispositif de commande d'une boîte de vitesses de véhicule automobile du type comportant un organe de commande mobile en translation axiale et en rotation autour de son axe pour, à partir d'une position axiale déterminée de sélection, provoquer par rotation dans un premier sens l'engagement du rapport de marche avant de rang le plus élevé par coopération de l'extrémité d'un doigt de commande avec une crosse associée audit rapport de marche avant et qui coulisse dans un plan perpendiculaire à l'axe de l'organe de commande, et pour provoquer par rotation dans le deuxième sens l'engagement du rapport de marche arrière par coopération de l'extrémité d'un doigt de commande de marche arrière avec une crosse de marche arrière formée à l'extrémité d'un basculeur qui pivote dans un plan parallèle à l'axe de l'organe de commande, les doigts de commande étant liés en translation et en rotation à l'organe de commande.

Un tel type de dispositif de commande est décrit dans le document EP-A 418 107 et publiée le 20/03/91.

Dans le cas d'une boîte de vitesses à plusieurs rapports de marche avant, et notamment dans le cas d'une boîte à cinq vitesses, le levier de changement de vitesses à double oscillations se déplace selon une grille comportant plusieurs couloirs parallèles. La grille la plus logique pour une boîte à cinq vitesses est une grille à trois couloirs de sélection dans laquelle la marche arrière et le cinquième rapport de marche avant sont placés l'un en face de l'autre.

Cette grille est particulièrement compacte et permet un positionnement précis des couloirs de sélection des rapports 1-2 et 5-AR par des butées latérales franches, et du couloir central 3-4 par le dispositif classique de rappel de point mort.

Un inconvénient connu de cet agencement de grille de sélection est que les deux rapports 5 et AR étant placés sur la même ligne de sélection, l'engagement de l'un de ces rapports entraîne un déplacement parasite de l'autre rapport. Il s'avère donc nécessaire de résoudre le problème technique consistant à entraîner les deux rapports 5-AR sur une même ligne de sélection en bénéficiant des avantages de la grille à trois couloirs tout en évitant les mouvements parasites du rapport qui n'est pas engagé.

Par ailleurs l'agencement du couloir de marche arrière strictement en face de celui du cinquième rapport de marche avant crée un risque important de fausse manoeuvre lors du rétrogradage de cinquième vitesse en quatrième vitesse.

Une première série de solutions visant à résoudre ce problème consiste à prévoir différents agencements de chanfreins sur les doigts et crosses de commande et à tarer le dispositif de rappel vers le point mort de manière appropriée.

Une autre solution consiste à imposer au conducteur, pour l'engagement du rapport de marche arrière, une intervention manuelle supplémentaire sur un dispositif de verrouillage du couloir de marche arrière, l'élément d'actionnement de ce verrouillage étant généralement prévu à la base du levier de commande de changement de vitesses.

Afin d'éviter l'agencement d'un dispositif supplémentaire extérieur et nécessitant l'action du conducteur, il a déjà été proposé de recourir à des dispositifs intégrés au dispositif de commande qui verrouillent automatiquement le couloir d'engagement de la marche arrière pendant l'engagement du cinquième rapport de marche avant et qui le libèrent ensuite lorsque le couloir de sélection 3-4 est atteint.

Une première solution connue consiste à ajouter une excroissance qui décrit la grille sur un élément mobile de la commande tel que le doigt de passage.

Selon une autre solution décrite et représentée dans le document DE-A-2.949.354 il est prévu de mettre en place devant cette excroissance un petit basculeur articulé sur un axe lié au carter pour constituer un mécanisme formant cliquet maintenu élastiquement dans une position neutre.

Dans ce dispositif, le mouvement de sélection du couloir 5-AR amène l'excroissance en appui contre le cliquet. Durant le mouvement de passage de la marche arrière ou du cinquième rapport de marche avant, le cliquet vient se placer derrière l'excroissance. Lors du mouvement de dégagement du cinquième rapport de marche avant, une butée du carter coopère avec le cliquet pour en empêcher le pivotement tandis qu'il est libre de pivoter lors du dégagement de la marche arrière.

L'ensemble des agencements et dispositifs de l'état de la technique qui viennent d'être décrits sont complexes à mettre en oeuvre dans la mesure où il est nécessaire de rapporter et/ou de fixer des pièces supplémentaires sur le carter dont le positionnement précis par rapport aux crosses est particulièrement délicat à assurer.

Afin de remédier aux inconvénients qui viennent d'être mentionnés, l'invention propose un dispositif de commande du type mentionné plus haut, caractérisé en ce qu'il comporte un loquet de verrouillage qui est monté pivotant sur le basculeur selon un axe parallèle à l'axe de pivotement du basculeur et autour d'une position médiane de repos vers laquelle il est rappelé élastiquement, et dont l'extrémité libre de verrouillage est reçue entre les deux faces transversales opposées délimitant l'évidement de la crosse de marche arrière qui reçoit l'extrémité du doigt de commande de marche arrière, la pénétration de l'extrémité du doigt de commande de marche arrière dans ledit évidement provoquant l'écartement de l'extrémité libre du loquet par pivotement en direction de la face transversale de dégagement de la crosse de marche arrière de manière à laisser le doigt de commande de marche arrière libre de pivoter dans les deux sens de rotation lors de l'engagement puis du dégagement du rapport de marche arrière et de manière à s'effacer lors de l'engagement dudit rapport de marche avant pour revenir à sa position médiane et s'interposer ensuite, lors du dégagement dudit rapport de marche avant, entre l'extrémité du doigt de commande de marche arrière et la face transversale d'engagement de la crosse de marche arrière, la face transversale de l'extrémité du loquet de verrouillage comportant une rampe qui coopère avec la portion en vis-à-vis de l'extrémité du doigt de commande de marche arrière pour provoquer un mouvement de translation axiale de l'organe de commande dans le sens correspondant à la sélection d'un rapport de marche avant de rang inférieur lors de la fin de la course en rotation de dégagement du rapport de marche avant de rang le plus élevé et empêcher l'entraînement du basculeur de sa position de repos vers sa position d'engagement de la marche arrière au moyen d'une ancre de verrouillage liée en translation axiale à l'organe de commande.

Selon d'autres caractéristiques de l'invention :
- l'ancre de verrouillage comporte un pavé de verrouillage qui est susceptible de coopérer avec ladite face transversale de dégagement de la crosse de marche arrière lors du mouvement de translation axiale susdit dû à la coopération de l'extrémité du doigt avec la rampe du loquet ;
- l'extrémité du loquet s'engage dans une encoche du plot de la crosse de marche arrière comportant la face transversale d'engagement ;
- le mouvement de translation axiale dû à la coopération de l'extrémité du doigt avec la rampe provoque la venue en butée de cette extrémité avec la face d'engagement du rapport de marche avant de rang inférieur agencée sur une crosse alors verrouillée par un pavé de l'ancre.

D'autres caractéristiques et avantages de l'invention apparaîtront à la lecture de la description détaillée qui va suivre pour la compréhension de laquelle on se reportera aux dessins annexés dans lesquels :
- La figure 1 est une vue en coupe partielle par un plan passant par l'axe de l'organe de commande et par l'axe de pivotement du basculeur et qui illustre de manière schématique les principaux organes constitutifs du dispositif de commande d'une boîte de vitesses à cinq rapports de marche avant et un rapport de marche arrière ;
- la figure 2 est une vue en perspective avec arrachement partiel d'un mode de réalisation du basculeur de marche arrière équipé du loquet de verrouillage selon l'invention ;
- les figures 3 à 11 sont des vues simplifiées selon la ligne 3-3 de la figure 1 illustrant les positions relatives des différents composants constitutifs du dispositif de commande de l'invention pour différentes étape et positions de sélection et d'engagement de la marche arrière et du cinquième rapport de marche avant ;
- la figure 12 est une vue en coupe selon la ligne 12-12 de la figure 11.

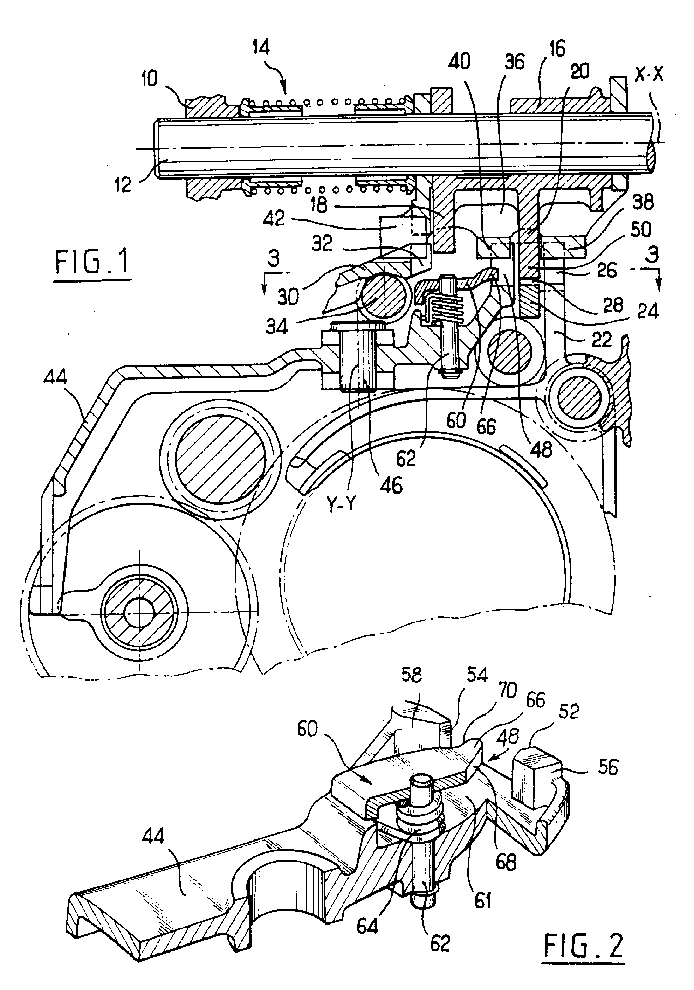

On reconnaît à la figure 1 un carter 10 d'une boîte de vitesses dans lequel un arbre de commande 12 est monté en translation axiale selon un axe X-X et en rotation dans les deux sens de rotation autour de cet axe.

L'arbre est équipé d'un dispositif classique de rappel en position de point mort 14, position dans laquelle il est illustré à la figure 1.

Un organe de commande 16 est lié en translation axiale et en rotation à l'arbre 12. L'organe de commande 16 comporte un premier doigt de commande 18 pour la sélection et le passage du cinquième rapport de marche avant et un second doigt de commande 20 pour la sélection et le passage des rapports 1 à 4 de marche avant et du rapport de marche arrière.

On reconnaît sur la figure 1 les fourchettes 22 et 24 associées respectivement aux rapports 1-2 et 3-4 et qui portent à leur extrémité supérieure des crosses correspondantes 26 et 28.

Les crosses 26 et 28 sont susceptibles de coulisser sous l'action du doigt 20 dans un plan perpendiculaire à l'axe X-X de l'organe de commande 16.

A gauche du premier doigt de commande 18, on reconnaît la noix 30 associée au cinquième rapport de marche avant qui comporte une crosse 32. La noix 30 est fixée à l'axe 34 de la fourchette du cinquième rapport de marche avant et la crosse 32 peut ainsi coulisser comme les crosses 26 et 28 dans un plan perpendiculaire à l'axe de l'organe de commande 16.

Une ancre de verrouillage 36 est liée en translation axiale à l'organe de commande 16 et elle comporte trois pavés de verrouillage 38, 40 et 42 qui sont disposés axialement depuis la droite vers la gauche en considérant la figure 1 de manière à verrouiller, selon une technique connue, les couloirs non sélectionnés.

Le basculeur 44 de marche arrière est monté pivotant autour d'un axe 46 de manière à pivoter autour d'un axe géométrique Y-Y perpendiculaire à l'axe X-X et sensiblement parallèle à la direction des doigts 18 et 20 lorsque ceux-ci sont en position centrale.

Le basculeur 44 s'étend ainsi dans un plan de pivotement sensiblement parallèle à l'axe X-X. Son extrémité libre supérieure comporte une crosse de marche arrière 48 en forme de fourche avec laquelle est susceptible de coopérer l'extrémité inférieure 50 du doigt de commande de marche arrière 20.

L'évidement de la crosse 48 dans lequel peut pénétrer l'extrémité 50 du doigt de commande 20 est délimité transversalement par deux faces 52 et 54 correspondant respectivement à l'engagement et au dégagement du rapport de marche arrière.

Comme on peut le constater à la figure 2, les faces transversales 52 et 54 sont formées sur deux plots 56 et 58 qui font saillie depuis la face supérieure plane 61 du basculeur 44.

Conformément à l'invention, un loquet de verrouillage 60 est monté pivotant sur le basculeur 44 au moyen d'un axe de pivotement 62 parallèle à l'axe Y-Y du basculeur.

Dans le mode de réalisation représenté aux figures, l'axe 62 est agencé entre l'axe 46 et la crosse 48 et son extrémité libre supérieure reçoit le loquet 60.

Dans sa position de repos, le loquet occupe une position médiane vers laquelle il est rappelé élastiquement dans les deux sens par un ressort en épingle 64 enroulé sur l'axe 62 de manière que l'extrémité libre de verrouillage 66 du loquet 60 soit reçue sensiblement entre les faces transversales 52 et 54 de la crosse 48.

L'extrémité libre 66 du loquet 60 comporte une face transversale 68 susceptible de venir en appui contre la face transversale 52 du plot 56 et une rampe 70 formée en vis-à-vis de la face transversale 54 du plot 58.

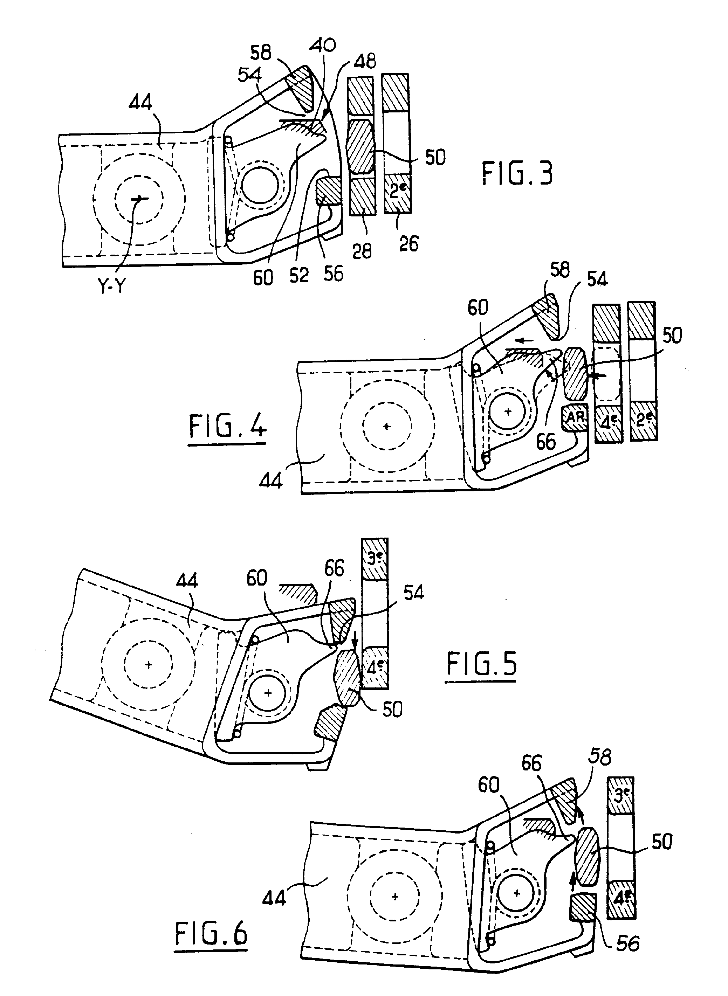

On décrira maintenant le mode de fonctionnement du dispositif de commande selon l'invention en se reportant aux figures 3 à 10.

Dans la position représentée à la figure 3, l'ensemble du dispositif de commande est au point mort, le doigt de commande de la marche arrière étant en position de sélection dans la crosse 28 des rapports 3 et 4 tandis que le basculeur de la marche arrière est dans sa position de point mort de même que le loquet de verrouillage qui est dans sa position médiane de repos.

Lorsque le conducteur déplace l'organe de commande 16 vers la gauche, en considérant la figure 1, pour atteindre la position de sélection déterminée dans laquelle il lui est possible d'engager la marche arrière ou le cinquième rapport de marche avant, l'extrémité 50 du doigt 20 pénètre dans la crosse 48 jusqu'à atteindre la position de sélection représentée à la figure 4. Au cours de ce mouvement, la coopération de la surface périphérique externe de l'extrémité 50 avec l'extrémité libre 66 du loquet 44 provoque le pivotement de ce dernier dans le sens anti-horaire de manière que l'extrémité se déplace en direction de la face latérale de dégagement 54 du plot 58.

Pour provoquer l'engagement de la marche arrière et atteindre la position représentée à la figure 5, le conducteur provoque la rotation de l'organe de commande de manière que le basculeur 44 pivote dans le sens horaire sous l'action de l'extrémité 50, mouvement au cours duquel il est suivi par le loquet 60 dont l'extrémité 66 est en appui sur la surface périphérique extérieure du doigt 50 dans la zone de cette dernière faisant sensiblement face à la face transversale 54.

Le dégagement de la marche arrière pour revenir à la position de sélection représentée à la figure 4 se fait en provoquant la rotation du doigt 50 dans le sens inverse (voir figure 6) ce qui provoque un pivotement du basculeur 44 dans le sens anti-horaire, le loquet 60 et son extrémité 66 n'interférant aucunement dans le déplacement du basculeur 44 et du doigt 50.

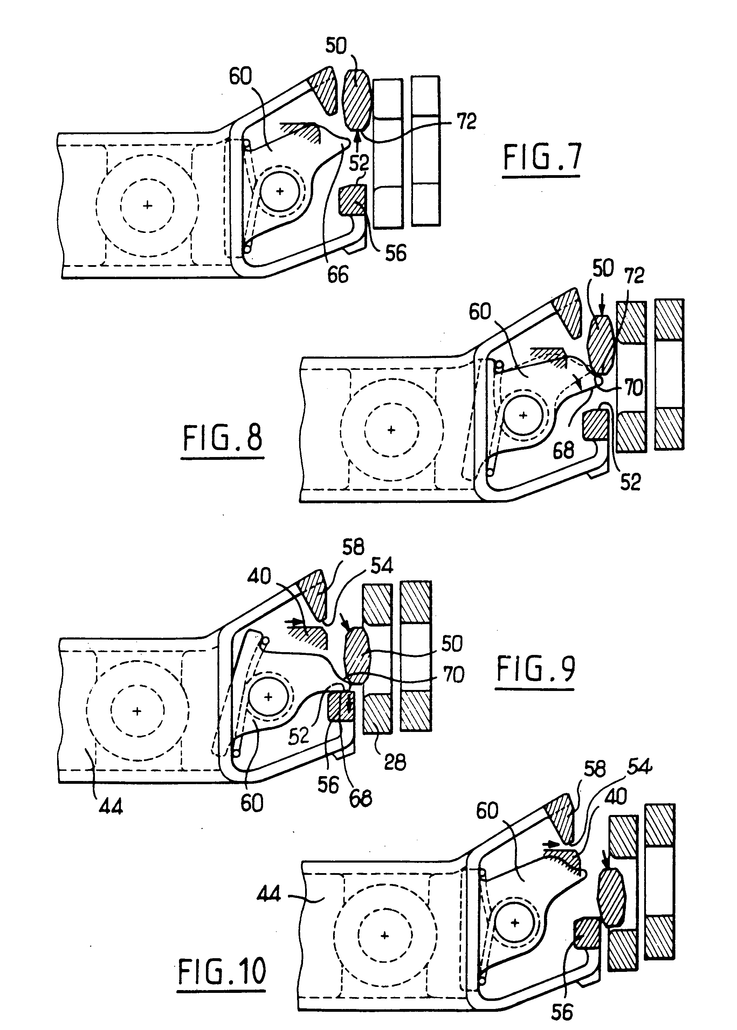

Le passage du cinquième rapport de marche avant s'effectue en provoquant la rotation de l'organe de commande 16 et donc le pivotement simultané des doigts 18 et 20 dans le sens correspondant au dégagement de la marche arrière mais au-delà de la position médiane des doigts dite position de sélection, pour atteindre la position relative représentée à la figure 7 dans laquelle on constate que le doigt 50 est passé au-delà de l'extrémité 66 du loquet 60, ce dernier s'étant effacé par pivotement dans le sens anti-horaire, puis étant revenu en position médiane par pivotement dans le sens horaire lors du déplacement vers le haut, en considérant les figures, de l'extrémité 50.

Dans cette position représentée à la figure 7 correspondant à l'engagement du cinquième rapport, l'extrémité 66 est désormais interposée entre la face transversale 72 de l'extrémité 50 et la face transversale d'engagement 52 du plot 56 qui lui fait face.

Lors du mouvement de dégagement du cinquième rapport, et comme cela est représenté à la figure 8, la face 72 du doigt 50 vient coopérer avec la rampe 70 formée à l'extrémité de verrouillage du loquet 60 pour provoquer la rotation de ce dernier dans le sens horaire jusqu'à ce que la face d'appui 68 vienne en butée contre la face transversale de dégagement 52 (voir figure 9). Le pivotement simultané des doigts 18 et 20 se poursuit et la coopération de la rampe 70 avec la face 72 du doigt 50 provoque le coulissement axial de l'organe de commande 16 et du doigt 20 selon la direction de sélection vers l'intérieur de la crosse 28.

Ce mouvement de translation axiale du doigt 20, vers la droite en considérant la figure 9, a pour effet d'entraîner simultanément l'ancre de verrouillage 36 et son pavé de verrouillage 40 qui vient se placer devant la face transversale d'engagement 54 et qui s'oppose ainsi à tout mouvement de basculement du basculeur de marche arrière 44 sous l'action de l'effort appliqué par le doigt 50 au plot 56 à travers l'extrémité 66 du loquet 60.

Tout engagement accidentel de la marche arrière lors du rétrogradage de cinquième en quatrième vitesse est ainsi évité conformément à l'invention.

Le mouvement de sélection puis de passage du quatrième rapport se poursuit et permet à l'extrémité 66 du loquet de se retrouver sa position médiane de repos entre les plots 56 et 58, le basculeur 44 demeurant verrouillé par le pavé de verrouillage 40.

Comme on peut le constater à la figure 1, le retour en position médiane du loquet 60 est rendu possible grâce au fait que le pavé de verrouillage 40 est agencé au-dessus de l'extrémité 66 du loquet 60 à l'opposé du fond de l'évidement de la crosse 48, les faces transversales d'engagement et de dégagement de cette dernière étant d'une hauteur suffisante pour coopérer avec le pavé de verrouillage 40 et avec l'extrémité 50 du doigt 20.

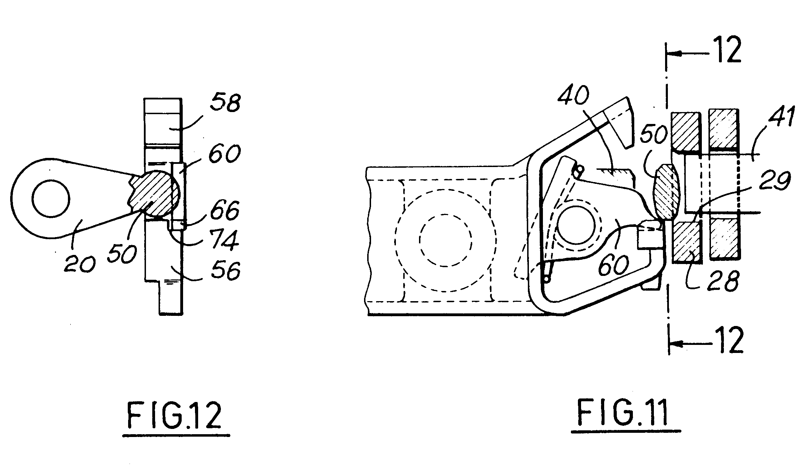

Dans la variante de réalisation illustrée aux figures 11 et 12, l'extrémité du loquet 60 s'engage dans une encoche 74 du plot 56 de manière à faciliter l'introduction de l'extrémité 50 du doigt dans la crosse 28 lors du passage de cinquième en quatrième.

L'interdiction de passage en marche AR est ici procurée par butée de l'extrémité 50 du doigt, déviée vers la droite par la rampe du loquet 60, contre la face 29 de la crosse 28 alors verrouillée par un pavé 41 de l'ancre 36 tant que le doigt 20, 50 n'est pas totalement dégagé de la crosse 48 de marche arrière.

## Revendications

1. Dispositif de commande d'une boîte de vitesses de véhicule automobile du type comportant un organe de commande (16) mobile en translation axiale et en rotation autour le son axe (X-X) pour, à partir d'une position axiale déterminée de sélection, provoquer par rotation dans un premier sens l'engagement d'un rapport de marche avant de rang le plus élevé par coopération de l'extrémité d'un doigt de commande (18) avec une crosse (32) associée audit rapport de marche avant et qui coulisse dans un plan perpendiculaire à l'axe (X-X) de l'organe de commande (16), et pour provoquer par rotation dans un deuxième sens l'engagement du rapport de marche arrière par coopération de l'extrémité (50) d'un doigt de commande de marche arrière (20) avec une crosse de marche arrière (48) formée à l'extrémité d'un basculeur (44) qui pivote dans un plan parallèle à l'axe de l'organe de commande, lesdits doigts de commande (18, 20) étant liés en translation et en rotation à l'organe de commande, ce dispositif comporte un loquet de verrouillage (60) qui est monté pivotant sur le basculeur (44) selon un axe (62) parallèle à l'axe de pivotement (Y-Y) du basculeur et autour d'une position médiane de repos vers laquelle il est rappelé élastiquement, et l'extrémité libre (66) du loquet de verrouillage (66) est reçue entre les deux faces transversales opposées (52, 54) délimitant l'évidement de la crosse de marche arrière (48) qui reçoit l'extrémité (50) du doigt de commande de marche arrière (20), la pénétration de cette dernière dans ledit évidement provoquant l'écartement de l'extrémité libre (66) du loquet de verrouillage (60) par pivotement en direction le la face transversale de dégagement (54) de la crosse de marche arrière (48) de manière à laisser le doigt de commande de marche arrière (20) libre de pivoter dans les deux sens de rotation lors de l'engagement puis du dégagement du rapport de marche arrière et de manière à s'effacer puis à revenir à sa position médiane lors de l'engagement dudit rapport de marche avant et s'interposer ensuite, lors du dégagement dudit rapport de marche avant, entre l'extrémité du doigt de commande de marche arrière (20) et la face transversale d'engagement (52) de la crosse de marche arrière, l'extrémité libre (66) du loquet de verrouillage (60) comportant une rampe (70) qui coopère avec une portion en vis-à-vis de l'extrémité (50) du doigt de commande de marche arrière (20) pour provoquer un mouvement de translation axiale de l'organe de commande (16) dans le sens correspondant à la sélection d'un rapport de marche avant de rang inférieur lors de la fin de la course en rotation de dégagement du rapport de marche avant de rang le plus élevé et empêcher l'entraînement du basculeur (44) de sa position de repos vers sa position d'engagement de la marche arrière au moyen d'une ancre de verrouillage (36) liée en translation axiale à l'organe de commande (16).

2. Dispositif de commande selon la revendication 1, caractérisé en ce que l'ancre de verrouillage (36) comporte un pavé de verrouillage (40) qui est susceptible de coopérer avec ladite face transversale de dégagement (54) de la crosse de marche arrière (48), lors dudit mouvement de translation dû à la coopération de l'extrémité (50) du doigt de commande de marche arrière (20) avec la rampe (70) du loquet de verrouillage (60).

3. Dispositif selon la revendication 1, caractérisé en ce que l'extrémité libre (66) du loquet de verrouillage s'engage dans une encoche (74) du plot (56) de la crosse de marche arrière comportant la face transversale d'engagement (52).

4. Dispositif selon la revendication 1, caractérisé en ce que ledit mouvement de translation dû à la coopération de l'extrémité (50) du doigt de commande de marche arrière (20) avec la rampe (70) provoque la venue en butée de cette extrémité (50) avec une face (29) d'engagement du rapport de marche avant de rang inférieur agencée sur une crosse (28) alors verrouillée par un pavé (41) d'une ancre (46).

## Patentansprüche

1. Betätigungseinrichtung eines Kraftfahrzeug-Schaltgetriebes des Typs mit einem Betätigungsteil (16), das zur axialen Verschiebung und Drehung um seine Achse (X-X) beweglich ist, um, ausgehend von einer bestimmten axialen Auswahlposition, durch Drehung in einem ersten Sinne das Einrücken eines Vorwärtsganges vom höchsten Rang durch Zusammenwirken des Endes eines Betätigungsfingers (18) mit einem Querhaupt (32), das dem besagten Vorwärtsgang zugeordnet ist und das in einer Ebene senkrecht zu der Achse (X-X) des Betätigungsteiles gleitet, zu bewirken und um durch Drehung in einem zweiten Sinne das Einrücken des Rückwärtsganges durch Zusammenwirken des Endes (50) eines Betätigungsfingers (20) für den Rückwärtsgang mit einem Querhaupt (48) für den Rückwärtsgang, das am Endbereich einer Kippeinrichtung (44) ausgebildet ist, welche sich in einer Ebene parallel zu der Achse des Betätigungsteiles dreht, zu bewirken, wobei die Betätigungsfinger (18, 20) für die Verschiebung und die Drehung mit dem Betätigungsteil verbunden sind, wobei diese Einrichtung eine Verriegelungsfalle (60) umfaßt, die um eine Achse (62) parallel der Drehachse (Y-Y) der Kippeinrichtung und um eine mittlere Ruheposition, in die sie elastisch rückgestellt wird, schwenkbar auf der Kippeinrichtung (44) angebracht ist und das freie Ende (66) der Verriegelungsfalle (60) zwischen den querverlaufenden gegenüberliegenden beiden Flächen (52, 54) aufgenommen wird, die die Vertiefung des Querhauptes (48) für den Rückwärtsgang begrenzen, welche das Ende (50) des Betätigungsfingers (20) für den Rückwärtsgang aufnimmt, wobei das Eindringen dieses letzteren in die Vertiefung das Trennen des freien Endes (66) der Verriegelungsfalle durch Verschwenken in Richtung der querverlaufenden Auslösefläche (54) des Querhauptes (48) für den Rückwärtsgang derart bewirkt, daß der Betätigungsfinger (20) für den Rückwärtsgang frei drehbar bezüglich der beiden Drehsinne gelassen wird, während des Einrückens nach dem Ausrücken des Rückwärtsganges, und derart, daß er sich zurückzieht, nach dem Zurückkehren in seine mittlere Position während des Einrückens des besagten Vorwärtsganges, und sich dann, während des Ausrückens des besagten Vorwärtsganges, zwischen das Ende des Betätigungsfingers (20) für den Rückwärtsgang und die querverlaufende Eingriffsfläche (52) des Querhauptes des Rückwärtsganges legt, wobei das freie Ende (66) der Verriegelungsfalle (60) eine Rampe (70) umfaßt, die mit einem Teil gegenüber dem Ende (50) des Betätigungsfingers (20) für den Rückwärtsgang zusammenwirkt, um eine axiale Verschiebungsbewegung des Betätigungsteiles (16) in dem Sinne entsprechend dem Auswählen eines Vorwärtsganges von geringerem Rang während des Beendens des Drehlaufes des Ausrückens des Vorwärtsganges mit höchstem Rang zu bewirken und den Antrieb der Kippeinrichtung (44) aus ihrer Ruheposition in die Eingriffsposition des Rückwärtsganges mittels eines Verriegelungsankers (36) zu verhindern, der bei axialer Verschiebung mit dem Betätigungsteil (16) verbunden ist.

2. Betätigungsvorrichtung nach Anspruch 1, dadurch gekennzeichnet, daß der Verriegelungsanker (36) einen Verriegelungsklotz (40) umfaßt, der geeignet ist, mit der besagten querverlaufenden Auslösefläche (54) des Querhauptes (48) für den Rückwärtsgang während der besagten Verschiebebewegung aufgrund des Zusammenwirkens des Endes (50) des Betätigungsfingers (20) für den Rückwärtsgang mit der Rampe (70) der Verriegelungsfalle (60) zusammenzuwirken.

3. Vorrichtung nach Anspruch 1, dadurch gekennzeichnet, daß das freie Ende (66) der Verriegelungsfalle in eine Aussparung (74) des Klötzchens (56) des Querhauptes für den Rückwärtsgang einrückt, welche die querverlaufende Eingriffsfläche (52) umfaßt.

4. Vorrichtung nach Anspruch 1, dadurch gekennzeichnet, daß die besagte Verschiebebewegung aufgrund des Zusammenwirkens des Endes (50) des Betätigungsfingers (20) für den Rückwärtsgang mit der Rampe (70) das In-Anschlag-Kommen dieses Endes (50) mit einer Eingriffsfläche (29) des Vorwärtsganges von geringerem Rang bewirkt, die auf einem Querhaupt (28) ausgebildet ist, das dann durch einen Klotz (41) eines Ankers (46) verriegelt wird.

## Claims

1. A device for controlling a motor vehicle gearbox of the type comprising a control element (16) movable in axial translation and in rotation round its axis (X-X) so as to produce, starting from a given selection position, by rotation in a first direction, the engagement of a top forward gear by cooperation of the end of a control finger (18) with a crosshead (32) associated with the said forward gear and which slides in a plane perpendicular to the axis (X-X) of the control element (16), and to produce by rotation in a second direction the engagement of the reverse gear by cooperation of the end (50) of a reverse gear control finger (20) with a reverse gear crosshead (48) formed at the end of a rocker (44) which pivots in a plane parallel to the axis of the control element, the said control fingers (18, 20) being linked in translation and rotation to the control element; this device includes a locking bolt (60) which is mounted for pivoting on the rocker (44) along a pin (62) parallel to the axis of pivoting (Y-Y) of the rocker and round a median rest position to which it is resiliently returned, and whose free end (66) of the locking bolt (60) is received between the two opposed transverse faces (52, 54) delimiting the recess for the reverse gear crosshead (48) which receives the end (50) of the reverse gear control finger (20), the penetration of the latter into the said recess producing the deflection of the free end (66) of the locking bolt (60) by pivoting towards the transverse disengagement face (54) of the reverse gear crosshead (48) so as to leave the reverse gear control finger (20) free to pivot in the two directions of rotation during the engagement and then disengagement of the reverse gear, and so as- to withdraw and then return to its median position during the engagement of the said forward gear and subsequently to be interposed during the disengagement of the said forward gear between the end of the reverse gear control finger (20) and the transverse disengagement face (52) of the reverse gear crosshead, the free end (66) of the locking bolt (60) comprising a ramp (70) which cooperates with a portion opposite the end (50) of the reverse gear control finger (20) so as to produce an axial translational movement of the control element (16) in the direction corresponding to the selection of a lower forward gear at the end of the rotational disengagement travel of the top forward gear and to prevent the entrainment of the rocker (44) from its rest position towards its position of engaging the reverse gear by means of a locking anchor (36) linked in axial translation to the control element (16).

2. A device according to claim 1, characterized in that the locking anchor (36) includes a locking block (40) which is capable of cooperating with the said transverse disengagement face (54) of the reverse gear crosshead (48) during the said translational movement due to the cooperation of the end (50) of the reverse gear control finger (20) with the ramp (70) of the locking bolt (60).

3. A device according to claim 1, characterized in that the free end (66) of the locking bolt engages in a notch (74) of the post (56) of the reverse gear crosshead comprising the transverse engagement face (52).

4. A device according to claim 1, characterized in that the said translational movement due to the cooperation of the free end (50) of the reverse gear control finger (20) with the ramp (70) causes this end (50) to abut on a face (29) for the engagement of the lower forward gear arranged on a crosshead (28), then locked by a block (41) of an anchor (46).
